(19) Europäisches Patentamt
European Patent Office
Office européen des brevets

(11) **EP 2 704 383 B1**

(12) **EUROPEAN PATENT SPECIFICATION**

(45) Date of publication and mention
of the grant of the patent:
**29.05.2019 Bulletin 2019/22**

(51) Int Cl.:
**H04L 25/03** *(2006.01)*      **H04L 27/26** *(2006.01)*

(21) Application number: **12290336.2**

(22) Date of filing: **09.10.2012**

(54) **Method and device for improving a home network making use of an adaptive guard interval**

Verfahren und Vorrichtung zur Verbesserung eines Heimnetzwerks durch Verwendung eines adaptiven Schutzintervalls

Procédé et dispositif pour améliorer un réseau domestique en utilisant un intervalle de garde adaptatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2012 EP 12290290**

(43) Date of publication of application:
**05.03.2014 Bulletin 2014/10**

(73) Proprietor: **Alcatel Lucent**
**91620 Nozay (FR)**

(72) Inventor: **Gacanin, Haris**
**2600 Antwerpen (BE)**

(74) Representative: **IP HILLS NV**
**Hubert Frère-Orbanlaan 329**
**9000 Gent (BE)**

(56) References cited:
**EP-A2- 1 531 593**

- RAMADAN ALI A ET AL: "Adaptive guard interval length for OFDM-based WLAN systems in frequency selective channels", WIRELESS TECHNOLOGY, 2008. EUWIT 2008. EUROPEAN CONFERENCE ON, IEEE, PISCATAWAY, NJ, USA, 27 October 2008 (2008-10-27), pages 115-118, XP031408487, ISBN: 978-2-87487-008-8

- NGUYEN-DUC QUANG ET AL: "An Optimal Algorithm of Estimation Channel Combining Kalman Filter with Adaptive Guard Interval for Mobile WiMAX Standard", COMPUTING AND COMMUNICATION TECHNOLOGIES, RESEARCH, INNOVATION, AND VISION FOR THE FUTURE (RIVF), 2012 IEEE RIVF INTERNATIONAL CONFERENCE ON, IEEE, 27 February 2012 (2012-02-27), pages 1-4, XP032138223, DOI: 10.1109/RIVF.2012.6169848 ISBN: 978-1-4673-0307-1

- SHIGANG TANG ET AL: "Channel estimation for cyclic postfixed OFDM", COMMUNICATIONS, CIRCUITS AND SYSTEMS, 2008. ICCCAS 2008. INTERNATIONAL CONFERENCE ON, IEEE, PISCATAWAY, NJ, USA, 25 May 2008 (2008-05-25), pages 246-249, XP031352919, DOI: 10.1109/ICCCAS.2008.4657769 ISBN: 978-1-4244-2063-6

- DONG-HYUN KANG ET AL: "A practical noise mitigation scheme for DVB-T/H system using delay spread estimation", IEEE TRANSACTIONS ON CONSUMER ELECTRONICS, IEEE SERVICE CENTER, NEW YORK, NY, US, vol. 53, no. 1, 5 January 2010 (2010-01-05), pages 9-17, XP011306106, ISSN: 0098-3063

- HARIS GACANIN: "Joint iterative channel estimation and guard interval selection for adaptive powerline communication systems", POWER LINE COMMUNICATIONS AND ITS APPLICATIONS (ISPLC), 2013 17TH IEEE INTERNATIONAL SYMPOSIUM ON, IEEE, 24 March 2013 (2013-03-24), pages 197-202, XP032420391, DOI: 10.1109/ISPLC.2013.6525849 ISBN: 978-1-4673-6014-2

## Description

### Field of the Invention

The present invention generally relates to the field of methods and devices for improving the throughput, quality, stability and performance of home network infrastructure.

### Background of the Invention

Residential internet connectivity traditionally consists of single voice-band modem, a Digital Subscriber Line or DSL modem, or a coax-cable modem, connected to a computer in the house. With the arrival of new applications and technologies, such as digital television, on-line gaming and home automation, the Internet access needs to be extended to various types of home devices, such as a set-top box, a game console, a home automation system, plural desktops or laptops, etc. All those home devices are then typically interconnected by means of a home network, which need to be set up and configured. A home network typically accesses the Internet via a home network gateway or residential gateway, which is connected to an access network via a traditional DSL modem or coax-cable modem. The interconnectivity between two devices in the home network itself is based on, typically already existing, in-house media such as twisted pair phone wires, electrical power wires, coax-cables and/or wireless technologies like WiFi.

Most of the time, the in-house available media typically suffers from a low quality physical layer offering poor immunity for interference in-house. Twisted pair phone wires are usually slightly twisted. Electrical power wires typically consist of low category cable that is not twisted at all. As a result, these existing media are usually sensitive to various kinds of noise. Further also the usable spectrum of such a home network is limited by the characteristics of the medium and structure of the network.

Some telecommunication standards, such as for example ITU G.hn, specify a single Physical Layer based on fast Fourier transform (FFT) orthogonal frequency-division multiplexing (OFDM) modulation and low-density parity-check code (LDPC) forward error correction (FEC) code. OFDM systems split the transmitted signal into multiple orthogonal sub-carriers, which allows the use of a guard interval (GI) in order to avoid inter symbol interference (ISI) in a multipath network environment such as a home network. In a multipath network environment the transmitted signals reach the receiver by two or more electromagnetic paths, for example caused by reflection. The receiver then receives the transmitted signal as a plurality of signals, each with a specific delay. A multipath network environment can exist in wireless networks, but can equally exist in wired media, for example in power line communication in which a plurality of parallel wiring paths are present and impedance mismatches cause signal reflections. These issues also arise in other communication mediums such as for example copper twisted pairs, coax. This could lead to the risk that the delayed signals of a received OFDM symbol would overlap with the signals of the next OFDM symbol. In order to avoid this risk, the transmitter inserts a GI at the beginning of the OFDM symbol. In some telecommunication standards, such as for example ITU G.hn, different sizes of GI are available. A specific GI length is chosen by the transmitter depending on the transmission modulation and coding scheme to cope with the specific multipath network environment. Usually a cyclically extended part of the OFDM, generally referred to as a cyclic prefix, is inserted into the GI. Furthermore the use of pilot signals, which are known symbols that are inserted into the signal at regular intervals and pilot carriers that continuously broadcast a reference signal, allows for time and frequency synchronization and channel estimation at the receiver end.

The GI length set by the transmitter is chosen to be able to cope with a predetermined multi-path network environment. GI length is set so that delayed signals, that were caused by a plurality of electromagnetic paths or channel multi-paths between transmitter and receiver, have a period that is smaller than the period of the GI. However in the context of a home network the characteristics of the multipath network environment might change considerably over time, for example in the case of a home network comprising power wires when devices are switched on or off or are plugged in or out of the power sockets or even during power fluctuations during operation of certain devices. The GI length chosen by the transmitter then risks being inadequately set for the current conditions.

An OFDM system with adaptive guard interval length is known from the publication Zhang Zhao-yang, Lai Li-feng, 2003, "A novel OFDM transmission scheme with length-adaptive Cyclic Prefix", Journal of Zhejiang University SCIENCE. The adapted guard interval is calculated during channel estimation as the double of the RMS delay spread estimation. Although this leads to a system with impact on the GI length at the side of the transmitter leading to an improved throughput, the impact of noise at the side of the receiver is not reduced during the channel estimation process which limits the possibilities to improve the average BER. Additionally, such systems are for example known from EP1531593 and RAMADAN ALI A ET AL: "Adaptive guard interval length for OFDM-based WLAN systems in frequency selective channels", WIRELESS TECHNOLOGY, 2008. EUWIT 2008. EUROPEAN CONFERENCE ON, IEEE, PISCATAWAY, NJ, USA, 27 October 2008 (2008-10-27), pages 115-118, XP031408487, ISBN: 978-2-87487-008-8

Therefore there exists a need for an improved method and system with adaptive guard interval length that is able to cope with changes in a home network environment more efficiently such that the average BER can be reduced without compromising the risk for inter-symbol interference.

## Summary of the Invention

The present invention is defined by the appended independent claims. Further alternatives are defined by the dependent claims.

## Brief Description of the Drawings

Fig. 1A and 1B schematically illustrate insertion of the Guard Interval during OFDM baseband generation in the transmitter;

Fig. 2A and 2B schematically illustrates a TDM and FDM pilot signal scheme;

Fig. 3 schematically illustrates a Channel Estimator comprising a windowing function;

Fig. 4 illustrates an adaptive windowing function;

Figure 5 shows the search algorithm for computing the optimal $\alpha$;

Figure 6 shows the setup of the transmitter and the receiver in order to allow an automated system;

Figure 7 illustrates the B calculation during the search algorithm;

Figure 8 shows the impact on the Bit Error Rate for a TDM and FDM pilot scheme; and

Figure 9 shows the impact of the number of multi-paths in the channel and the level of parameter estimation accuracy.

## Detailed Description of Embodiment(s)

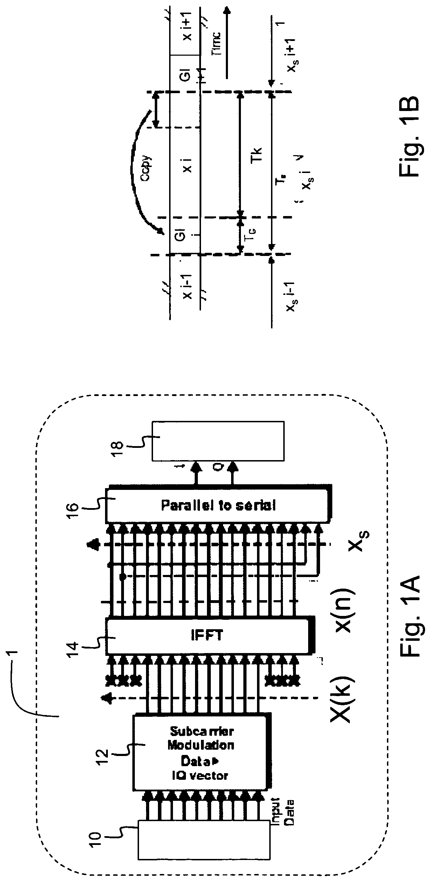

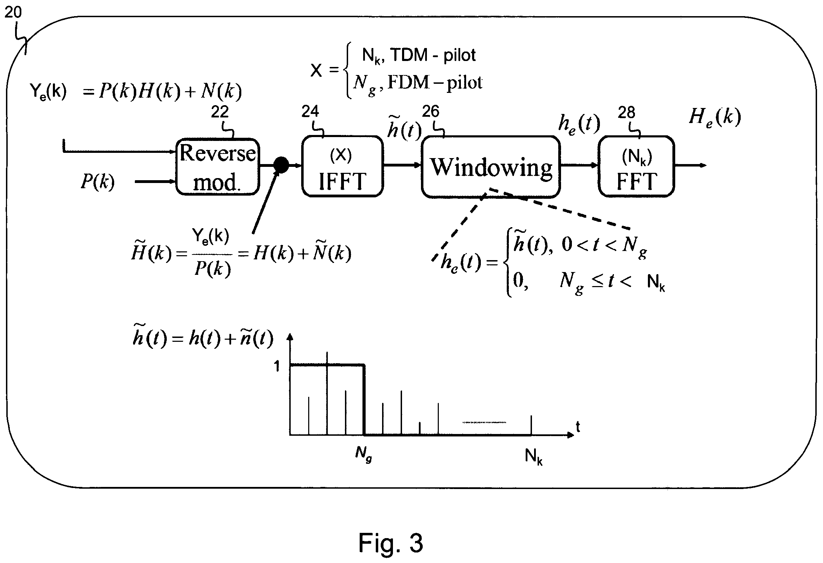

Figure 1 schematically shows a part of the baseband signal 18 generator of an OFDM transmitter 1. The resulting baseband signal is then used to modulate a carrier frequency. Binary input data 10 is fed to a subcarrier modulator 12 that maps groups of binary input data onto Into In phase (I) and Quadrature (Q) symbols which can be used to modulate the phase and the amplitude of a plurality of sub-carriers of the OFDM signal. These sub-carriers are provided as a plurality of parallel signal channels at predetermined frequencies, typically spaced apart by a predetermined frequency difference in function of the respective bandwidth of the sub-carriers. Known examples of modulation are for example Quadrature Phase Shift Keying (QSPK), 16 Quadrature Amplitude Modulation (QAM-16), QAM-64, Differential Quadrature Phase Shift Keying (DQPSK), ... , which each map a plurality of bits in the form of a symbol onto such a sub-carrier. The subcarrier modulator 12 also takes care of insertion of pilot symbols, which will be explained with respect to Figure 3. This creates a modulation data sequence {X(k)}, where k denotes the subcarrier index and with a length of Nk, which is fed to an Inverse Fourier Transformator 14 (IFFT) which transforms the modulation data sequence {X(k)} into a time domain signal {x(n)} with the following equation: x(n) = IDFT{X(k)}, n=0, 1, 2, ..., Nk - 1. Subsequently the GI is inserted, as shown in Figure 1A and 1B, as the cyclically extended part of the OFDM symbol. This means that a predetermined number (Ng) of samples at the end of the time domain signal {x(n)} are added to in front of this signal to

$$x_f = \begin{cases} x(Nk + n), \ n = -Ng, -Ng + 1, ..., -1 \\ \qquad x(n), \ n = 0, 1, ..., Nk - 1 \end{cases}.$$

create the OFDM symbol $x_f(n)$ with the following equation: 
Ng determines the length of the GI and as explained above is chosen to be larger than the expected delay spread caused by the multipath network environment to prevent inter-symbol interference. By inserting the cyclically extended part of the time domain signal {x(n)} into the GI the risk of inter-carrier interference is reduced. A parallel to serial convertor 16 finalizes the generation of the baseband signal 18. As shown in Figure 1B in this way the OFDM transmitter 1 generates a sequence of OFDM symbols $x_f(n)$ with a period Ts comprising the sequence of Ng samples of the GI during a period Tg and the Nk samples of the sequence of Nf = (Ng + Nk) samples the time domain signal x(n) during a period Tk. In the examples given below the following values will be used for the parameters mentioned below Ng = 16, Nk =256, Nf = Ng + Nk = 16 + 256 = 272. It is clear that other suitable values could be chosen and that typically Nf is about 2000 - 4000 and corresponds to the number of subcarriers being used for transmitting the OFDM signal. It is clear that the enumerators k and n as used above can thus also be referred to as a subcarrier index or subcarrier enumerator. It is further clear that the length of the guard interval Ng could also be referred to as the length of the cyclically extended part of the time domain signal in the GI, also referred to as the cyclic prefix.

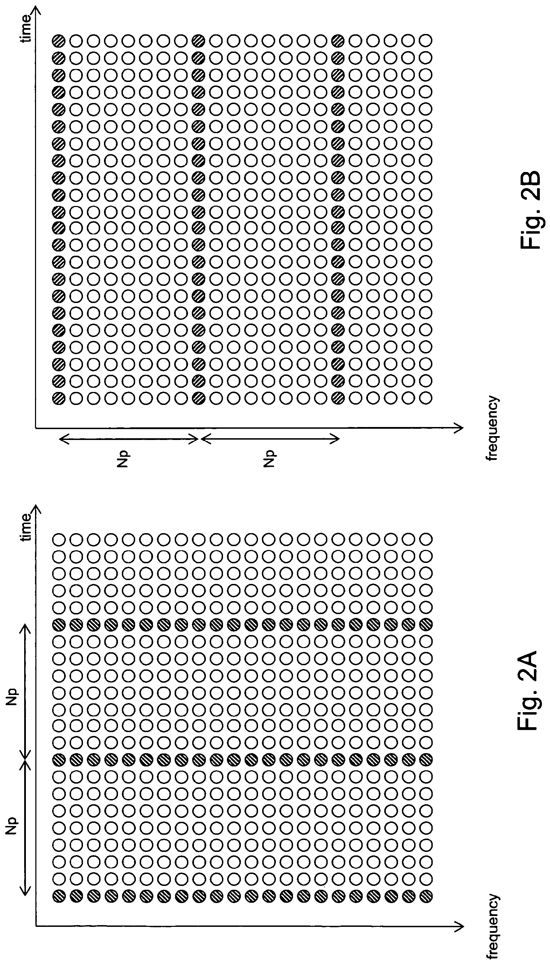

Transmitter 1 will insert pilot signals in order to allow reliable channel estimation by the receiver 2 so that for example frequency selective fading or phase changes can be coped with efficiently. There are two main types of Channel Estimation know. The first one is based on time domain multiplexed (TDM) pilot signals in which the transmitter 1 inserts at regular intervals, every Np OFDM symbols, a known Pilot signal on all the subcarriers as shown in Figure 2A. The second one is based on frequency domain multiplexed (FDM) pilot signals in which the transmitter 1 inserts for every OFDM symbol on a predetermined number of subcarriers a known pilot signal, for example every Np subcarriers as shown in Figure 2B. Typically a suitable combination of TDM and FDM pilot signals are used by the transmitter 1. For the purpose of example in this description Np will be chosen to be 16, which means that every 1/16 OFDM symbols comprises a pilot signal on all subcarriers and that every 1/16 subcarriers constantly transmits a pilot signal.

The receiver 2 will receive the signal sent by the transmitter 1 and demodulate it from the carrier frequency in order to produce an OFDM baseband signal from which the OFDM symbols can be extracted as $y_s(n) = x_f(n) \otimes h(n) + n(n)$, with n = -Ng, -Ng+1, ... , -1, 0, 1, ..., Nk -1, and where h(n) is the channel impulse response of the channel 3 between the transmitter 1 and the receiver 2 and n(n) is the noise added to signal during transmission in the channel 3. The receiver will remove the GI from the baseband signal in order to produce a received time domain signal $y(n) = y_f(n + Ng)$, n = 0,1, ..., Nk - 1 subsequently the received time domain signal y(n) is sent to a Fourier Transformator in order to produce a received modulation data sequence Y(k)= FFT(y(n)), k = 0, 1, ..., Nk-1, with a length of Nk. Assuming there is no ICI or ISI the received modulation data Y(k) = X(k)H(k)+N(k), where H(k) = FFT(h(n)) and N(k)=FFT(n(n)). After this operation the receiver 2 will extract the pilot signals $Y_e(k) = P(k) H_e(k)+N(k)$ and provide them to a Channel Estimator in order to determine the estimated channel information $H_e(k) = Y_e(k) / P(k)$. As the transmitted pilot signal P(k) is known $H_e(k)$ can be easily determined from $Y_e(k)$. The estimated channel information $H_e(k)$ is then used to adjust demodulation of the received OFDM symbols.

Figure 3 schematically shows the operation of a Channel Estimator 20 (CE) comprising a windowing function of the receiver 2. As explained above in order to determine the estimated channel information $H_e(k)$ in a first step 22 the received pilot signals are reverse modulated. Subsequently an Inverse Fourier Transform is applied at step 24. The Inverse Fourier Transform (IFFT) is applied to the X subcarriers of the pilot signals. In the case of TDM pilot signals this means that X is equal to Nk and in the case of FDM pilot signals X is equal to Ng. Subsequently the Channel Estimator 20 applies a windowing function to the resulting time domain signal at step 26 so that the effect of the noise on the extraction of the estimated channel information from the pilot signals P(k) can be reduced. Subsequently the windowed time domain signal is converted to the estimated channel information at step 28 by means of a Fourier transformation (FFT). As explained above the estimated channel information $H_e(k)$ is then used to adjust demodulation of the received OFDM symbols of the current transmission.

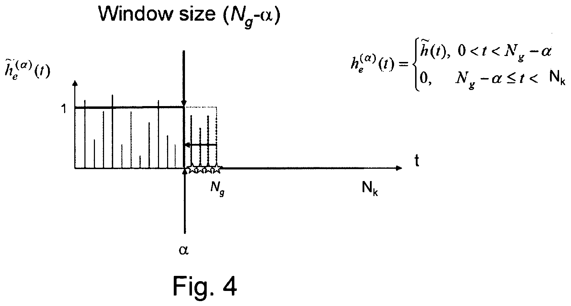

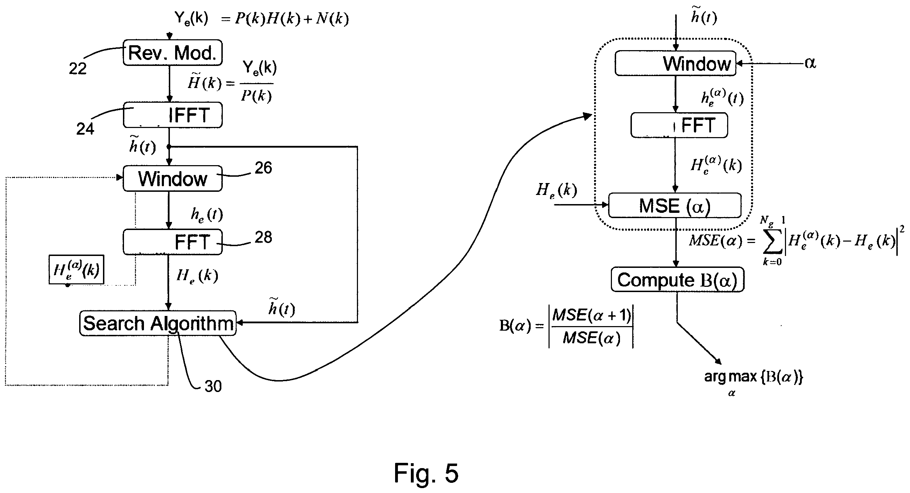

According to the invention however after performing this channel estimation with a window size equal to the guard interval length Ng, resulting in said estimated channel information He(k) this channel estimation is repeated a plurality of times with a modified window size. As shown in Figure 4 if the window size can be reduced such that it is equal to the guard interval length Ng minus an integer filtering parameter $\alpha$, then the negative noise effect on the channel estimation can be reduced leading to a reduction in the BER and of course also leading to an increased throughput if an adapted guard interval length Ng' could be used for future transmissions. In order to enable such a reduction this filtering parameter $\alpha$ is an integer in the range from 1 to Ng - 1. For each of these filtering parameter $\alpha$ values a respective estimated channel information $H_e^{(\alpha)}(k)$ is calculated as shown in Figure 5 during an additional iterative step 30 comprising a search algorithm. Subsequently for each of said channel estimations this search algorithm calculates an

estimator $$MSE(\alpha) = \sum_{k=0}^{Nk-1} \left| H_e^{(\alpha)}(k) - H_e(k) \right|$$ and based on this ratio $$B(\alpha) = \left| \frac{MSE(\alpha+1)}{MSE(\alpha)} \right|.$$ An optimal $\alpha = \text{argmax}_\alpha \{B(\alpha)\}$ can then be calculated finally allowing the calculation of an adapted guard interval length Ng' = Ng - optimal $\alpha$.

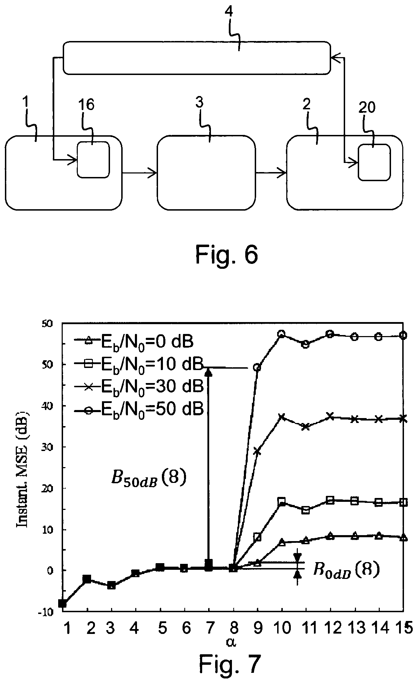

As schematically shown in Figure 6 the search algorithm can be executed by a control system 4 which is connected to the channel estimator 20 of the receiver 2 that receives an OFDM transmission from a transmitter 1 through a multipath channel 3. After determining the optimal $\alpha$ from applying the search algorithm on the current transmission the control system 4 could signal to both the transmitter 1 as the receiver 2 the adapted guard interval length Ng' for use as the guard interval length during future transmissions. During the next transmission cycle this adapted guard interval length Ng' will then be used by the transmitter 1 during insertion of the guard interval at step 16 and the receiver 2 during the guard interval removal and channel estimation. In this way it is possible to cope with varying channel conditions in an improved and efficient way that will not only allow an improvement in throughput of about 5%-6%, but also an improved BER because of a better rejection of noise during channel estimation as the size of the windowing function is better adapted to the number of multi-paths in the channel.

In order to also cope with a channel changes that deteriorate the channel multi-path situation and require an increase in the guard interval length the filtering parameter α can additionally be an integer in the range from -1 to -(Ng-1).

According to still further alternative embodiments still other ranges for the filtering parameter α can be provided, which not necessarily need to be integer ranges, but could equally be for example a range comprising a plurality of real values. In general the filtering parameter α is to be selected from a plurality of values in the range from -Ng to Ng, so that it results in a corresponding plurality of non-zero window sizes for performing the repeated channel estimations according to the method of the invention. It is further clear that also the step in between two consecutive values for the filtering parameter α in this range must not be 1 as in the examples described above, any other suitable integer or non-integer value could alternatively be chosen as the step between two consecutive values for the filtering parameter α.

Figure 7 illustrates the calculation of the ratio $B(\propto) = \left| \frac{MSE(\propto+1)}{MSE(\propto)} \right|$ during the search algorithm for several values of signal to noise energy ratio (Eb/N0). In this particular example it can clearly be seen that the optimal $\propto = $ argmax$_\propto\{B(\propto)\}$ will be $\propto = 8$.

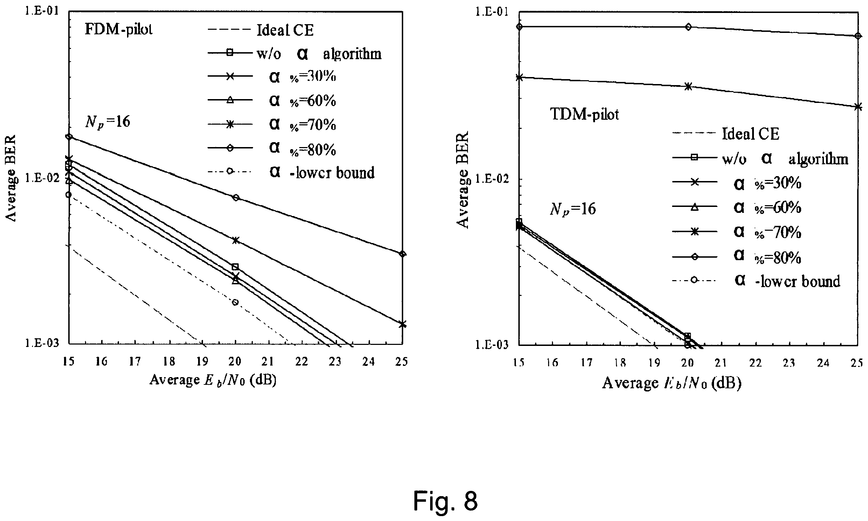

The BER performance using the method according to the invention with both FDM-pilot and TDM-pilot are illustrated in Figure 8. It can be seen that the BER performance is improved until α-lower bound. The lower bound of BER is obtained for an α that equals the number of multi-paths. However in order to cope with accumulation of errors in the calculations due to channel noise optimal $\propto$ could alternatively be reduced by multiplication with a certain per-

$$\propto = \left\lfloor \text{argmax}_\propto\{B(\propto)\} . \frac{\propto\%}{100} \right\rfloor,$$

centage. In that case optimal in which $\propto$ % ranges from 0 to 100. In the case of TDM-pilot the BER performance is improved for about 1 dB with respect to FDM pilots.

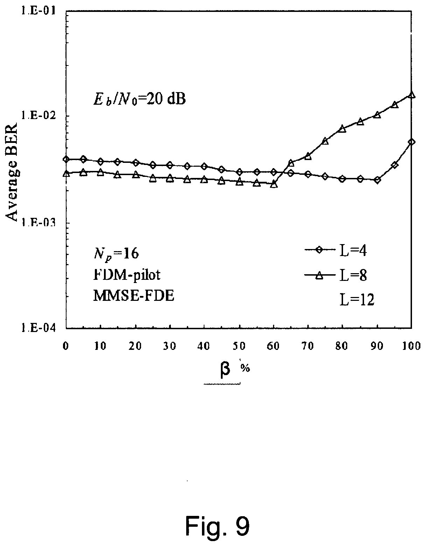

Figure 9 shows the BER performance with varying numbers of channel paths L. It further validates the previous results and clarifies the dependence of optimal α on the number of channel paths L.

Although in the embodiments above the estimator $MSE(\alpha)$ has been calculated as

$$MSE(\alpha) = \sum_{k=0}^{Nk-1} \left| H_e^{(\propto)}(k) - H_e(k) \right|,$$

it is clear that according to alternative embodiments this estimator $MSE(\alpha)$ can be calculated in alternative ways. In general any calculation will enable a suitable estimator $MSE(\alpha)$ it quantifies the difference between the estimated channel information $H_e(k)$ with a window size equal to the guard interval length Ng, and the estimated channel information $H_e^{(\propto)}(k)$ with the non-zero window size equal to the guard interval length Ng minus the filtering parameter α. It is also clear that any other suitable means square error function then the one displayed in the embodiments described above will enable an alternative embodiment according to the invention.

It is also not required to calculate the ratio B($\propto$) as in the example above as ratio $B(\propto) = \left| \frac{MSE(\propto+1)}{MSE(\propto)} \right|.$ In general it suffices to calculate a ratio B($\propto$) between an estimator MSE(α) for a filtering parameter α of a current channel estimation and an estimator of another of the plurality of channel estimations. However calculation of the optimal $\propto$ can be performed efficiently if that other channel estimation is one of the plurality of channel estimations of which the filtering parameter α is a higher step value of the range of the plurality of values for the plurality of filtering parameters α. This means a higher step value of the range with respect to the filtering parameter α of the current channel estimation.

According to still further embodiments it is also not required to calculate optimal $\propto$ in function of argmax$_\propto\{B(\propto)\}$ as in general it will suffice to calculate an optimal $\propto$ in function of a filtering parameter $\alpha$ for which the ratio $B(\propto)$ reaches an extremum, which, depending on the ration used could be for example a maximum or minimum of this ratio $B(\propto)$.

Although the embodiments described above refer to an OFDM communication scheme, the method according to the invention is equally applicable to any other similar scheme that makes use of a Guard Interval, such as for example block processing schemes, comprising any multicarrier or single carrier scheme with GI.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof.

The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method of operating an OFDM receiver (2) configured to receive a signal transmitted from an OFDM transmitter (1) by means of at least Nk subcarriers, said receiver (2) and said transmitter (1) being connected to a control system (4) configured to calculate an adapted guard interval length Ng', said method comprises the steps of:

   - said receiver (1) comprising a Channel Estimator extracting the estimated channel information $H_e(k)$ from the pilot signals P(k) by means of a windowing function;
   - Performing said channel estimation with a window size equal to the guard interval length Ng, resulting in said estimated channel information $H_e(k)$,
   - k being a subcarrier index and ranging from 0 to Nk-1 in integer increments, **CHARACTERIZED IN THAT**, said method further comprises the steps of
   - Repeating said channel estimation a plurality of times with a non-zero window size equal to the guard interval length Ng minus a filtering parameter $\alpha$, said filtering parameter $\alpha$ being selected from a corresponding plurality of values in the range from -Ng to Ng, resulting in respective estimated channel information $H_e^{(\alpha)}(k)$;
   - for each of said plurality of channel estimations:

   $$MSE(\alpha) = \sum_{k=0}^{Nk-1} \left| H_e^{(\alpha)}(k) - H_e(k) \right|;$$
   ○ calculate an estimator

   $$B(\alpha) = \left| \frac{MSE(\alpha+1)}{MSE(\alpha)} \right|;$$
   ○ calculate a ratio

   - calculate an optimal $\alpha$ in function of $\text{argmax}_\alpha\{B(\alpha)\}$;
   - calculate an adapted guard interval length Ng' = Ng - optimal $\alpha$.

2. A method according to claim 1, **characterised in that** said filtering parameter $\alpha$ is an integer in the range from -(Ng-1) to (Ng-1), optionally in the range from 0 to Ng-1.

3. A method according to any of the preceding claims, wherein said adapted guard interval length Ng' is provided by said control system (4) to said transmitter (1) and said receiver (2).

4. A method according to claim 3, **characterised in that** said transmitter (1) and said receiver (2) adapts said guard interval length Ng for future transmissions to said adapted guard interval length Ng'.

5. An OFDM receiver (2) configured to receive a signal transmitted from an OFDM transmitter (1) by means of at least Nk subcarriers, said receiver (2) and said transmitter (1) being connected to a control system (4) configured to calculate an adapted guard interval length Ng' and configured to perform the method steps according to any of the claims 1 to 4, wherein said receiver (2) comprises said control system (4).

6. An OFDM transmitter (1) configured to send to an OFDM receiver (2) configured to receive a signal transmitted from said OFDM transmitter (1) by means of at least Nk subcarriers, said receiver (2) and said transmitter (1) being connected to a control system (4) configured to calculate an adapted guard interval length Ng' and configured to perform the method steps according to any of the claims 1 to 4, wherein said transmitter (1) comprises said control system (4).

7. A computer program product comprising instructions which, when the program is executed by a computer, cause the computer to perform the method steps according to any of the claims 1 to 4.

8. A computer readable storage device having stored thereon the computer program product of claim 7.

**Patentansprüche**

1. Verfahren zum Betreiben eines OFDM-Empfängers (2), der konfiguriert ist, um ein von einem OFDM-Sender (1) mittels mindestens eines Nk-Unterträgers gesendetes Signal zu empfangen, wobei der Empfänger (2) und der Sender (1) mit einem Steuersystem (4) verbunden sind, das konfiguriert ist, um eine angepasste Schutzintervalllänge Ng' zu berechnen,
   wobei das Verfahren die folgenden Schritte umfasst:

   - Extrahieren der Informationen des geschätzten Kanals $H_e(k)$ aus den Pilotsignalen P(k) mittels einer Fensterfunktion durch den einen Kanalschätzer umfassenden Empfänger (1);
   - Durchführen der Kanalschätzung mit einer Fenstergröße, die gleich der Schutzintervalllänge Ng ist, was in den Informationen des geschätzten Kanals $H_e(k)$ resultiert,
   - wobei k ein Unterträgerindex ist und in einzahligen Inkrementierungen von 0 bis Nk-1 reicht, **DADURCH GEKENNZEICHNET, DASS** das Verfahren ferner die folgenden Schritte umfasst:
   - Wiederholen der Kanalschätzung eine Vielzahl von Malen mit einer Fenstergröße von ungleich Null, die der Schutzintervalllänge Ng abzüglich eines Filterparameters $\alpha$ entspricht, wobei der Filterparameter $\alpha$ ausgewählt ist aus einer entsprechenden Vielzahl von Werten im Bereich von -Ng bis Ng, resultierend in jeweiligen Informationen des geschätzten Kanals $H_e^{(\alpha)}(k)$;
   - für jede der Vielzahl von Kanalschätzungen:

   • einen Schätzer berechnen
   $$MSE(\alpha) = \sum_{k=0}^{Nk-1} \left| H_e^{(\alpha)}(k) - H_e(k) \right|;$$

   • ein Verhältnis berechnen
   $$B(\alpha) = \left| \frac{MSE(\alpha+1)}{MSE(\alpha)} \right|;$$

   - ein optionales $\alpha$ in Abhängigkeit von argmax $_\alpha\{B(\alpha)\}$ berechnen;
   - eine angepasste Schutzintervalllänge Ng' = Ng - optimales $\alpha$ berechnen.

2. Verfahren nach Anspruch 1, **dadurch gekennzeichnet, dass** der Filterparameter $\alpha$ eine ganze Zahl im Bereich von -(Ng-1) bis (Ng-1), optional im Bereich von 0 bis Ng- 1 ist.

3. Verfahren nach einem der vorstehenden Ansprüche, wobei die angepasste Schutzintervalllänge Ng' durch das Steuersystem (4) dem Sender (1) und dem Empfänger (2) bereitgestellt wird.

4. Verfahren nach Anspruch 3, **dadurch gekennzeichnet, dass** der Sender (1) und der Empfänger (2) die Schutzintervalllänge Ng für künftige Sendungen auf die angepasste Schutzintervalllänge Ng' anpasst.

5. OFDM-Empfänger (2), der konfiguriert ist, um ein von einem OFDM-Sender (1) mittels mindestens eines Nk-Unterträgers gesendetes Signal zu empfangen, wobei der Empfänger (2) und der Sender (1) mit einem Steuersystem (4) verbunden sind, das konfiguriert ist, um eine angepasste Schutzintervalllänge Ng' zu berechnen und der konfiguriert ist, die Verfahrensschritte nach einem der Ansprüche 1 bis 4 durchzuführen, wobei der Empfänger (2) das Steuersystem (4) umfasst.

**6.** OFDM-Sender (1), der konfiguriert ist, um an einen OFDM-Empfänger (2) zu senden, der konfiguriert ist, ein vom OFDM-Sender (1) mittels mindestens eines Nk-Unterträgers gesendetes Signal zu empfangen, wobei der Empfänger (2) und der Sender (1) mit einem Steuersystem (4) verbunden sind, das konfiguriert ist, um eine angepasste Schuztintervalllänge Ng' zu berechnen, und konfiguriert ist, die Verfahrensschritte nach einem der Ansprüche 1 bis 4 auszuführen, wobei der Sender (1) das Steuersystem (4) umfasst.

**7.** Computerprogrammprodukt, umfassend Anweisungen, die, wenn das Programm durch einen Computer ausgeführt wird, den Computer veranlassen, die Verfahrensschritte nach einem der Ansprüche 1 bis 4 auszuführen.

**8.** Computerlesbare Speichervorrichtung mit darauf gespeichert dem Computerprogrammprodukt nach Anspruch 7.

**Revendications**

**1.** Procédé de fonctionnement d'un récepteur à multiplexage par répartition orthogonale de la fréquence (OFDM) (2) conçu pour recevoir un signal émis par un émetteur OFDM (1) au moyen d'au moins Nk sous-porteuses, ledit récepteur (2) et ledit émetteur (1) étant connectés à un système de commande (4) conçu pour calculer une longueur d'intervalle de garde adaptée Ng',
ledit procédé comprenant les étapes de :

- ledit récepteur (1) comprenant un estimateur de canal extrayant les informations de canal estimées $H_e(k)$ à partir des signaux pilotes P(k) au moyen d'une fonction de fenêtrage ;
- réalisation de ladite estimation de canal avec une taille de fenêtre égale à la longueur d'intervalle de garde Ng, aboutissant ainsi auxdites informations de canal estimées $H_e(k)$,
- k étant un indice de sous-porteuse et allant de 0 à Nk-1 par incréments entiers, **CARACTÉRISÉ EN CE QUE**, ledit procédé comprend en outre les étapes de
- répétition de ladite estimation de canal une pluralité de fois avec une taille de fenêtre non nulle égale à la longueur d'intervalle de garde Ng auquel est soustrait un paramètre de filtrage $\alpha$, ledit paramètre de filtrage $\alpha$ étant choisi parmi une pluralité correspondante de valeurs dans la plage allant de -Ng à Ng, aboutissant aux informations de canal estimées respectives $H_e^{(\alpha)}(k)$;
- pour chacune de ladite pluralité d'estimations de canal :

• calculer un estimateur $MSE(\alpha) = \sum_{k=0}^{Nk-1} \left| H_e^{(\alpha)}(k) - H_e(k) \right|$;

• calculer un taux $B(\alpha) = \left| \frac{MSE(\alpha+1)}{MSE(\alpha)} \right|$;

- calculer un $\alpha$ optimal en fonction de argmax $\alpha\{B(\alpha)\}$ ;
- calculer une longueur d'intervalle de garde adaptée Ng' = Ng-a optimal.

**2.** Procédé selon la revendication 1, **caractérisé en ce que** ledit paramètre de filtrage $\alpha$ est un entier compris dans la plage allant de -(Ng-1) à (Ng-1), éventuellement dans la plage allant de 0 à Ng-1.

**3.** Procédé selon l'une quelconque des revendications précédentes, ladite longueur d'intervalle de garde adaptée Ng' étant fournie par ledit système de commande (4) audit émetteur (1) et audit récepteur (2).

**4.** Procédé selon la revendication 3, **caractérisé en ce que** ledit émetteur (1) et ledit récepteur (2) adaptent ladite longueur d'intervalle de garde Ng pour des transmissions futures à ladite longueur d'intervalle de garde adaptée Ng'.

**5.** Récepteur OFDM (2) conçu pour recevoir un signal émis par un émetteur OFDM (1) au moyen d'au moins Nk sous-porteuses, ledit récepteur (2) et ledit émetteur (1) étant connectés à un système de commande (4) conçu pour calculer une longueur d'intervalle de garde adaptée Ng'
et conçu pour effectuer les étapes du procédé selon l'une quelconque
des revendications 1 à 4, ledit récepteur (2) comprenant ledit système de commande (4).

**6.** Émetteur OFDM (1) conçu pour envoyer à un récepteur OFDM (2) conçu pour recevoir un signal émis par ledit émetteur OFDM (1) au moyen d'au moins Nk sous-porteuses, ledit récepteur (2) et ledit émetteur (1) étant connectés à un système de commande (4) conçu pour calculer une longueur d'intervalle de garde adaptée Ng'
et conçu pour effectuer les étapes du procédé selon l'une quelconque des revendications 1 à 4,
ledit émetteur (1) comprenant ledit système de commande (4).

7. Produit-programme informatique comprenant des instructions qui, lorsque le programme est exécuté par un ordinateur, amènent l'ordinateur à effectuer les étapes du procédé selon l'une quelconque des revendications 1 à 4.

8. Dispositif de stockage lisible par ordinateur sur lequel est stocké le produit-programme informatique de la revendication 7.

Fig. 1B

Fig. 1A

Fig. 2A

Fig. 2B

EP 2 704 383 B1

$$X = \begin{cases} N_k, \text{TDM - pilot} \\ N_g, \text{FDM} - \text{pilot} \end{cases}$$

$$Y_e(k) = P(k)H(k) + N(k)$$

Reverse mod. → (X) IFFT → Windowing → (N_k) FFT → $H_e(k)$

$\tilde{h}(t)$

$P(k)$

$$\tilde{H}(k) = \frac{Y_e(k)}{P(k)} = H(k) + \tilde{N}(k)$$

$$h_e(t) = \begin{cases} \tilde{h}(t), \ 0 < t < N_g \\ 0, \quad N_g \le t < N_k \end{cases}$$

$$\tilde{h}(t) = h(t) + \tilde{n}(t)$$

Fig. 3

EP 2 704 383 B1

Fig. 4

EP 2 704 383 B1

Fig. 5

Fig. 6

Fig. 7

EP 2 704 383 B1

15

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1531593 A

**Non-patent literature cited in the description**

- **ZHANG ZHAO-YANG ; LAI LI-FENG.** A novel OFDM transmission scheme with length-adaptive Cyclic Prefix. *Journal of Zhejiang University SCI-ENCE,* 2003

- Adaptive guard interval length for OFDM-based WLAN systems in frequency selective channels. **RA-MADAN ALI A et al.** WIRELESS TECHNOLOGY, 2008. EUWIT 2008. EUROPEAN CONFERENCE ON. IEEE, 27 October 2008, 115-118